# EUROPEAN PATENT APPLICATION

(11) **EP 3 875 259 A1**
(43) Date of publication of application: **08.09.2021**
(21) Application number: 19879824.1
(22) Date of filing: 29.10.2019
(51) Int. Cl.: B29D 11/00, G01N 21/17

(54) **METHOD FOR AUTOMATICALLY INJECTING MONOMER FOR OPTICAL MATERIAL INTO MOLD**

(30) Priority: 29.10.2018 KR 20180129550
(71) Applicant: KOC Solution Co., Ltd., Daejeon 34122 (KR)
(72) Inventor: JANG, Dong Gyu, Daejeon 35205 (KR); KIM, Joon Sup, Gumi-si Gyeongsangbuk-do 39183 (KR)
(74) Representative: Serjeants LLP
(86) International application number: PCT/KR2019/014323
(87) International publication number: WO 2020/091362

(57) **Abstract**

In the present invention, sealing tape is wrapped around the outer circumferential surface of an introduced mold, and a monomer solution is injected into a cavity formed therein, wherein the injection amount of the monomer solution can be precisely controlled by using a vision recognition system. According to a preferable embodiment, a monomer solution (S) of a monomer solution tank (10) is suctioned, in advance, into a syringe (20) capable of adjusting a capacity corresponding to a mold (M); most of the monomer solution (S), which has been injected into the syringe (20), is firstly injected into the mold (M) at a high injection flow rate or injection speed; while the residual amount of the monomer solution (S) is secondly injected at a reduced injection flow rate or injection speed, it is finally confirmed, by using a vision recognition system, whether the monomer solution (S) is filled in the mold (M); and then injection is finished.

## Description

### [Technical Field]

The present invention relates to a method of preparing an optical material by injecting a monomer solution into a cavity formed between a pair of molds having a sealed outer circumference, and more particularly to a method of automatically injecting a monomer for optical materials into a mold that is capable of injecting the monomer in a set amount within a short time by detecting the fluid level of the monomer solution using a vision recognition system while injecting the monomer from a raw material tank into a cavity of the mold, and stopping injection when the fluid level is detected at a final injection point.

### [Background Art]

As optical materials, plastic lenses have become more popular because they are advantageous in that they are light, are not easily broken and are more workable than glass lenses. Such a plastic lens is manufactured by injecting a polymer compound, that is, a monomer, into a mold, hardening the same, and performing appropriate post-processing. That is, the plastic lens is manufactured by injecting a monomer solution into a mold having a lens-shaped empty injection area (cavity).

As the prior art relating to such a plastic lens, Patent Document 1 discloses a "device for setting a moving distance of a mold for manufacturing an eyeglass lens".

This document discloses that, in the state where glass molds are spaced apart from each other using a mold chuck in order to accurately determine the spacing distance between the glass molds for manufacturing the eyeglass lens, taping is performed to attach a piece of tape to the outer peripheral surface of the glass mold, and a monomer solution is manually injected into the formed cavity.

However, since the method of manually injecting the monomer into the glass mold disclosed in Patent Document 1 depends entirely on the skill of the worker performing injection, defects may occur and work efficiency may be deteriorated depending on the skill level. In particular, since a great deal of skill is required to precisely inject a predetermined amount of monomer every time, there is a problem in that bubbles may be generated in the mold by an inexperienced worker. In addition, since a liquid monomer generates volatile gases harmful to the human body, long-term operation may adversely affect the health of the worker.

Patent Document 2 discloses a "device for automatically injecting a monomer for eyeglass lenses and a method of manufacturing eyeglass lenses using the same". Patent Document 2 aims at increasing the productivity of products at the manufacturing site, reducing the defect rate and realizing an eco-friendly manufacturing environment by automating the process of injecting raw materials into the mold. The device of Patent Document 2 includes a mold-loading unit, a tape attachment/detachment unit and a monomer injection unit, and is designed to automatically inject a monomer for lenses through supplying the mold for lenses, mold loading, tape detaching, monomer injection, tape attaching, and unloading the mold for lenses.

Meanwhile, in Patent Document 2, the position of the lens mold is determined using a displacement sensor (laser sensor) for detecting the position of the lens mold in the step of injecting the monomer solution into the cavity formed by a pair of molds, the level of the raw material filling the lens mold is detected by a second moving unit, and the amount of the monomer that is injected through the injection nozzle is controlled by an injection-amount-adjusting unit, wherein the amount of the injected monomer is adjusted to a level of 5 mm (step 1) and to a level of 10 mm (step 2) when the monomer reaches a certain level.

However, when detecting the level of the raw material (monomer solution) using the displacement sensor as in Patent Document 2, the monomer solution is more viscous than water, so the changed level has a two-dimensional symmetrical parabolic shape rather than a horizontal shape. For this reason, there has been a problem in that it is difficult to accurately detect the level in real time, and it is thus difficult to inject the correct amount despite stepwise adjustment of the injection amount, so the actually injected amount is insufficient or excessive, thus disadvantageously causing product defects, contaminating the injection equipment with the overflowing monomer solution and potentially interfering with stable operation of the equipment.

In addition, the "method and device for manufacturing plastic products" of Patent Document 3 is a method for automating the process of injecting a plastic stock solution into a mold for molding in the process of manufacturing a plastic lens. In the method, a first flow rate and a first time are set by measuring the width between the first and second walls in the cavity, and a first step of injecting the plastic stock solution into the cavity at the first flow rate for the first time and then a second step of injecting the plastic stock solution at a second flow rate, which is lower than the first flow rate, are performed, so the stock solution is injected at a high flow rate only for a predetermined time, and then the stock solution is injected at a low flow rate at the end of the injection. As a result, the injection time can be shortened and the amount of leakage can be reduced.

However, in accordance with the injection method according to Patent Document 3, the injection time and the leakage amount are reduced by reducing the injection amount and injection time of the plastic raw material stepwise in consideration of spatial characteristics inside the cavity. However, the characteristics of the fluid level change of the highly viscous plastic raw materials are not taken into consideration when a plastic raw material for manufacturing lenses is injected into the mold for lenses. For this reason, there still remain drawbacks in that leakage of plastic raw material cannot be effectively prevented, or the amount of a plastic raw material that is injected cannot be optimally controlled.

The "method of molding plastic lens" of Patent Document 4 (Japanese Patent Laid-Open Publication No. 2008-80766) is a method of molding a plastic lens wherein, in order to fill the mold with a liquid molding material while leaving as few bubbles as possible when injecting the liquid molding material into the mold in the same manner as pouring liquor by tilting a glass, in the initial stage, injection begins while the inlet is slightly moved to one side from the upper center, and when injection has proceeded to some extent, the mold is filled with the raw material monomer in the state in which the inlet is located in the upper center by rotating (tilting) the mold.

However, although Patent Document 4 discloses a method suitable for injecting a raw material while preventing bubbles from remaining, it is not enough to inject the raw material in a precise amount.

### [Prior Art Document]

### [Patent Document]

(Patent Document 1) Korean Utility Model No. 20-0236704 (registered on June 21, 2001)
(Patent Document 2) Korean Patent No. 10-1383132 (registered on April 2, 2014)
(Patent Document 3) Japanese Patent No. 3707189 (registered on August 12, 2005)
(Patent Document 4) Japanese Patent Laid-Open Publication No. 2008-80766 (published on April 10, 2008)

### [Disclosure]

### [Technical Problem]

Therefore, the present invention has been made in view of the above problems, and it is an object of the present invention to provide a method for automatically injecting a monomer for optical materials into a mold that is capable of shortening the time taken to inject the monomer solution into the mold in order to manufacture optical materials and injecting a set amount of the monomer solution into the mold using a vision recognition system.

### [Technical Solution]

In accordance with an aspect of the present invention, the above and other objects can be accomplished by the provision of a method of automatically injecting a monomer for optical materials into a mold, comprising injecting a monomer solution into a cavity formed between a pair of molds having a sealed outer circumference, the method including injecting most of the monomer solution into the mold, and injecting the remaining amount thereof until the fluid level is detected at a final injection point using a vision recognition system, and then ending the injection.

In the present invention, the automatic injection method includes a first step of injecting most of the monomer solution into the mold at a high injection flow or speed, and a second step of slowly injecting the remaining amount thereof at an injection flow or speed lower than in the first step until a fluid level is detected at a final injection point using a vision recognition system, and then ending the injection.

Preferably, the vision recognition system images a two-dimensional shade formed by the outline of the mold and the fluid level of the monomer solution injected into the mold, and sets a first region located in a part of the outline of the mold and a second region located outside the mold to detect the state in which the mold is set at the injection position, and the controller injects the monomer solution in a syringe into the mold when the outline of the mold is detected in the first region, and ends the injection of the monomer solution when the fluid level is detected in the second region.

In the first and second regions, the outline of the mold and the fluid level of the monomer solution are detected based on a change in the shade. Preferably, the change in shade can be detected based on a change in the number of pixels.

In a preferred embodiment of the present invention, a virtual outline is displayed in the form of an arc in the first region, an imaging position is adjusted such that the imaged outline of the mold corresponds to the virtual outline when the mold outline is detected in the first region, and the change in the fluid level is detected by adjustment of the position of the second region depending on a change in the position of the first region.

In an embodiment of the present invention, the first region is intended to mean a location that has information of a diagonal direction, that is, both X-direction information and Y-direction information, in an outer circumference of the mold, and is a component for detecting a change in the position of the mold when the mold is loaded at the injection position, the first region serves as a reference for the positional movement of the second region and the first region detects the outline of the mold immediately when the mold is loaded at the injection position.

In an embodiment of the present invention, the second region is set outside a position close to the monomer inlet of the mold in order to fill the cavity inside the mold with the monomer solution without forming bubbles, and is generally installed at a position within 1 to 2 mm from the outline of the mold.

In a preferred embodiment, when the monomer solution primarily injected into the syringe is injected into the mold, the controller controls the driving unit to inject 90 to 98% of the monomer solution at a high injection flow or speed, and to slowly inject the remaining amount thereof at a lower injection flow or speed.

### [Advantageous effects]

According to the present invention, when a monomer solution is injected into the mold, the fluid level is monitored using a vision recognition system, and the injection is automatically stopped when the fluid level reaches the final injection point, so the monomer solution can be advantageously injected in a set amount, which is neither insufficient nor excessive.

According to a specific embodiment of the present invention, when a viscous monomer solution is injected into the cavity inside the mold, the monomer solution is primarily sucked into the syringe set to correspond to the capacity of the cavity of the mold, and is rapidly injected into the mold at a high injection flow or speed. In the final step, the remaining amount is slowly injected at a lower injection flow rate or speed to fill the cavity therewith, so there is no risk of exceeding the injection capacity. In addition, most of the monomer solution in the syringe is rapidly injected into the mold and then the injection is ended when the monomer solution is detected in the second region using the vision recognition system, so there are no residual bubbles and the monomer solution is injected in a fixed amount, which is neither excessive nor insufficient, to manufacture a lens with uniform quality, and to increase the efficiency of the monomer injection operation through the shortened injection time of the monomer. Accordingly, it is possible to prevent defects due to injection of an insufficient amount of the monomer solution and to prevent abnormal operation or failure of equipment caused by injection of excessive monomer solution.

### [Brief description of Drawings]

FIG. 1 is a flowchart schematically showing a lens-manufacturing process according to an embodiment of the present invention.
FIG. 2 is a block diagram illustrating a method for automatically injecting a monomer according to an embodiment of the present invention.
FIG. 3 shows the state in which the monomer solution of FIG. 2 is primarily sucked into a syringe.
FIG. 4 shows the state in which the monomer solution of FIG. 3 is being injected into a mold.
FIG. 5 shows the state in which the monomer solution of FIG. 4 is charged in the mold.

### [Best Mode]

Hereinafter, preferred embodiments that do not limit the present invention will be described with reference to the accompanying drawings in detail.

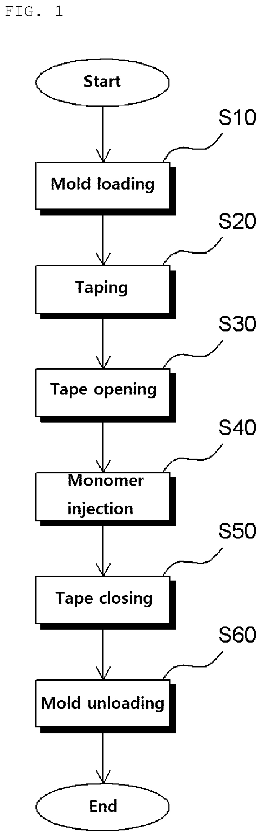

First, as shown in FIG. 1, a method of automatically injecting a monomer solution into a mold to manufacture an optical material such as a lens includes the steps of mold loading S10, taping S20, tape opening S30, monomer injection S40, tape closing S50 and mold unloading S60, and further includes subsequent steps of curing the monomer and separating the lens from the mold to complete manufacture of the lens.

The mold used in the embodiment of the present invention is a pair of molds with a sealed outer circumference, and a monomer solution is injected into a cavity formed between the pair of molds. In this case, the material of the mold is not limited and any material suitable for removal and attachment after curing of the cured monomer can be used. Preferably, a glass mold may be used.

An adhesive tape including a film such as polyethylene (PE), polypropylene (PP), polyethylene terephthalate (PET) and nylon as a base film for sealing of the mold may be used, but is not limited thereto. When an aryl-based monomer having a final curing temperature of 100°C or less is injected and cured, it is preferable to use an adhesive tape based on a PP film. When a monomer having a final curing temperature of 100°C or higher is injected and cured, it is preferable to use an adhesive tape having a PET film as a base film. In addition, when a urethane-, acryl- or episulfide-based monomer is injected and cured, although the final curing temperature of the monomer is 100°C or less, it is preferable to use an adhesive tape based on a PET film.

The monomer used in the embodiments of the present invention may include all of various monomer compounds that can be used as optical lenses and eyeglass lenses. For example, the monomer may include acryl-based monomers, epoxy acryl-based monomers, polyisocyanates and polythiols for thiourethane-based optical materials, episulfide compounds for episulfide-based optical materials, alkylene glycol bisaryl carbonates, maleate compounds, or allyl diglycol carbonates for aryl-based optical materials, and the like.

In a preferred embodiment, the monomer is a monomer composition for acryl-based optical materials containing at least one of an epoxy acrylate compound represented by Formula 1 below and an epoxy acrylate compound represented by Formula 2 below:

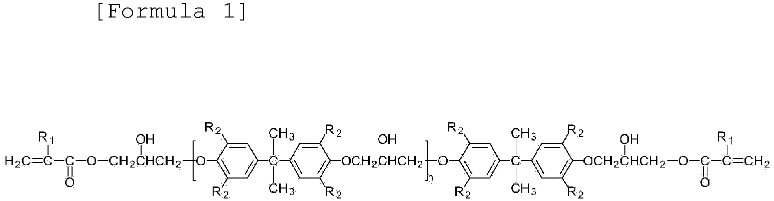

(wherein n is 0 to 15, R₁ is H or CH₃, and R₂ is H or Br)

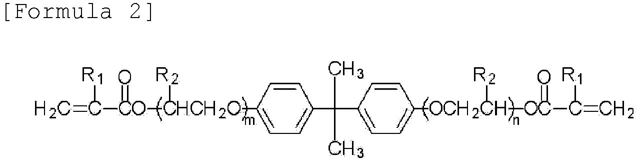

(wherein R₁ and R₂ are H or CH₃, m is 0 to 5, n is 0 to 5, m and n are not both 0 and m + n is 1 to 10.)

The monomer composition for acryl-based optical materials may further include one, two or more compounds selected from the group consisting of styrene, divinylbenzene, alpha methyl styrene, alpha methyl styrene dimers, methyl methacrylate, benzyl methacrylate, chlorostyrene, bromostyrene, methoxystyrene, monobenzyl maleate, dibenzyl maleate, monobenzyl fumarate, dibenzyl fumarate, methylbenzyl maleate, dimethyl maleate, diethyl maleate, dibutyl maleate, dibutyl fumarate, monobutyl maleate, monopentyl maleate, dipentyl maleate, monopentyl fumarate, dipentyl fumarate, and diethylene glycol bisarylcarbonate.

The monomer composition for acryl-based optical materials may further include an internal release agent. By adding an internal release agent to the resin composition before mold polymerization, the release property after polymerization can be significantly improved. As an internal release agent, a phosphate ester compound, a silicone surfactant, a fluorine surfactant, an alkyl quaternary ammonium salt or the like can be used alone or in combinations of two or more thereof. The internal release agent is preferably present in an amount of 0.001 to 10% by weight in the polymerizable composition.

In addition, the monomer composition for acryl-based optical materials may further include a thermal stabilizer. The thermal stabilizer is, for example, one or two or more compounds selected from the group consisting of metal fatty acid salts including calcium stearate, barium stearate, zinc stearate, cadmium stearate, lead stearate, magnesium stearate, aluminum stearate, potassium stearate, zinc octoate and the like. The thermal stabilizer is preferably present in an amount of 0.01 to 5.00% by weight in the monomer composition. When the thermal stabilizer is used in an amount less than 0.01% by weight, the thermal stabilization effect is weak, and when the thermal stabilizer is used in an amount more than 5.00%, the polymerization defect rate may be high during curing and the thermal stability of the cured product may be lowered.

The injection of the monomer composition for acryl-based optical materials into the mold is preferably performed in a temperature range of 5 to 60°C, and more preferably in a temperature range of 5 to 40°C. By performing injection within an appropriate temperature, the pot life can be properly maintained, and the occurrence of striae, rings, and variable and incomplete curing in the finally obtained optical material can be reduced, thereby improving the quality of the optical material.

In another preferred embodiment, the monomer is a monomer composition for aryl-based optical materials that comprises "component A", which includes one or more compounds selected from alkylene glycol bisaryl carbonate and maleate compounds, and "component B", which is a diaryl ester compound represented by Formula 3 below.

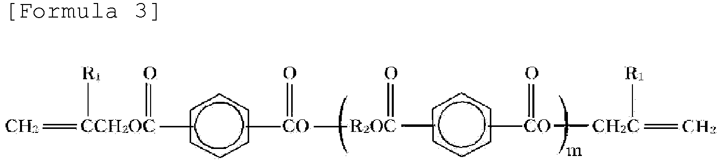

(wherein R₁ represents a hydrogen atom or a methyl group, OR₂ represents a dihydric alcohol residue having 1 to 5 carbon atoms, and m is an integer of 0 to 20.)

The component A and component B may be preferably mixed in a ratio of 5 to 70% by weight and 30 to 95% by weight. When the content of the diaryl ester compound (component B) is less than 30% and the content of the component A compound exceeds 70%, there may be problems of low impact strength or low refractive index of the manufactured optical lens. When the content of the diaryl ester compound exceeds 95%, the viscosity of the monomer composition increases, making it difficult to inject the monomer composition into the glass mold and lowering productivity. The component A and the component B may be more preferably mixed in a ratio of 10 to 60% by weight and 40 to 90% by weight.

The alkylene glycol bisaryl carbonate may be preferably represented by Formula 4 below. The alkylene glycol bisaryl carbonate is particularly preferably diethylene glycol bisaryl carbonate.

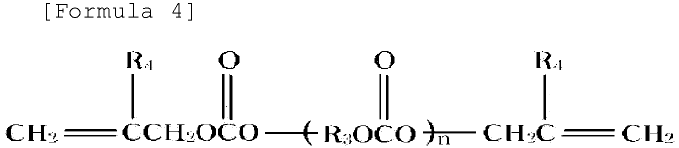

(wherein R₄ represents hydrogen or a methyl group, -OR₃ represents a dihydric alcohol residue having 1 to 10 carbon atoms, and n represents an integer of 1 to 10.)

The diaryl ester compound represented by Formula 3 may be prepared through a transesterification reaction of partially adding a dihydric alcohol, i.e., ethylene glycol, propylene glycol, 1,3-propanediol, 1,4-butanediol, 1,3-butanediol, or neopentyl glycol, to diarylphthalate, diarylisophthalate, diaryl terephthalate or the like.

The maleate compound is preferably selected from the group consisting of dibenzyl maleate, monobenzyl maleate, dibenzyl fumarate, methyl benzyl maleate, methyl benzyl fumarate, dimethyl maleate, diethyl maleate, dibutyl maleate, dibutyl fumarate, monobutyl maleate, dipentyl maleate and dipentyl fumarate.

The monomer composition for aryl-based optical materials may further include a phosphate ester compound. In the present composition, the phosphate ester serves to prevent yellowing of the optical lens caused by heat during the annealing process. In the present composition, the phosphate ester is preferably present in an amount of 0.001 to 3% by weight (10 to 30,000 ppm), and more preferably in an amount of 0.02 to 2% by weight (200 to 20,000 ppm). When the phosphate ester is present in an amount of less than 0.001% by weight, it is difficult to prevent yellowing due to heat, and when the content exceeds 3% by weight, the glass mold is detached from the solid resin during the curing process, resulting in a defect in the form of striae on the lens surface. The phosphate ester may be preferably represented by the following Formula 5.

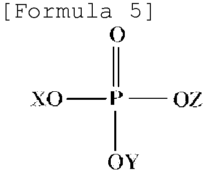

(wherein X, Y and Z are selected from the group consisting of hydrogen, halogen, alkyl, allyl, phenyl, ethylene oxide or propylene oxide-added alcohol moieties and haloalkyl hydrocarbons, and are the same as or different from each other.)

The injection of the monomer composition for aryl-based optical materials into the mold is preferably performed in a temperature range of 50°C or less, and more preferably in a temperature range of -10 to 50°C, even more preferably, in a temperature range of 5 to 40°C. By performing the injection within an appropriate temperature, the pot life can be properly maintained, and the occurrence of striae, rings, and variable and incomplete curing in the finally obtained optical material can be reduced, thereby improving the quality of the optical material.

In another preferred embodiment, the monomer is an allyl diglycol carbonate monomer composition containing diethylene glycol bisallyl carbonate, represented by Formula 6 below, and isopropylperoxydicarbonate.

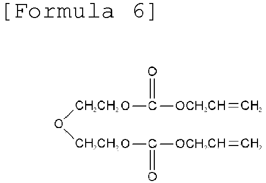

The allyl diglycol carbonate monomer composition may further include a phosphate ester compound. In the present composition, the phosphate ester serves to prevent yellowing of the optical lens caused by heat during the annealing process. In the present composition, the phosphate ester is preferably present in an amount of 0.001 to 3% by weight (10 to 30,000 ppm), and more preferably in an amount of 0.02 to 2% by weight (200 to 20,000 ppm). When the phosphate ester is present in an amount of less than 0.001% by weight, it is difficult to prevent yellowing due to heat, and when the content exceeds 3% by weight, the glass mold is detached from the solid resin during the curing process, resulting in a defect in the form of striae on the lens surface. The phosphate ester may be preferably represented by Formula 5.

The monomer may further include an ultraviolet absorber and a polymerization initiator (catalyst). In addition, the monomer may further include additives such as organic dyes, anti-coloring agents, antioxidants and light stabilizers in a conventional manner, as necessary, according to a conventional method in the field of plastic optical lenses.

The viscosity of the monomer used in the automatic injector of the present invention is preferably 500 CPS or less, and more preferably 10 to 150 CPS. When the viscosity of the monomer is high, bubbles are generated during injection, and it takes a long time to remove the bubbles, thus causing a problem of prolonged injection time.

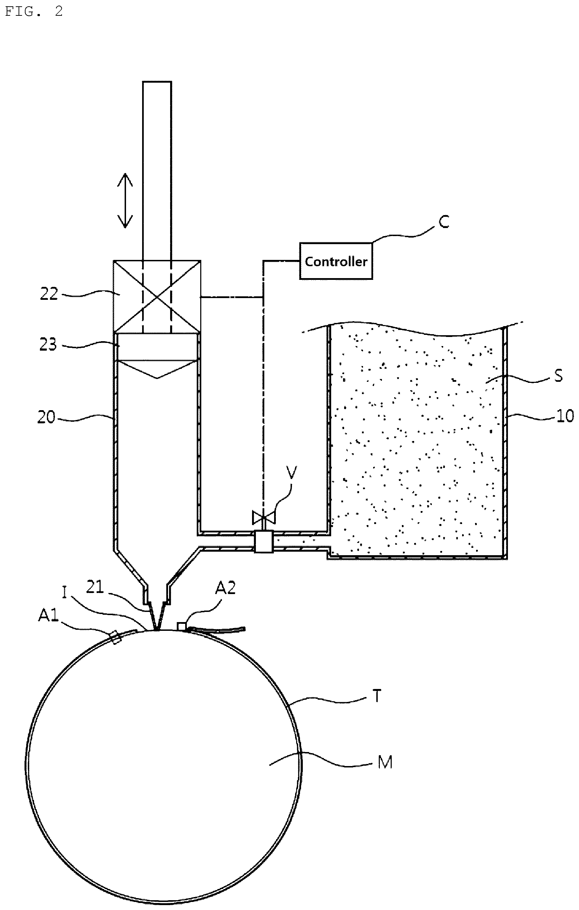

In this embodiment, a specific method including detecting a fluid level using a vision recognition system while injecting a monomer from a raw material tank into the cavity of the mold and stopping injection of the monomer solution when the fluid level is detected at the set final injection point is suggested. As shown in FIGS. 2 to 5, a monomer solution S in the monomer solution tank 10 is first sucked into a syringe 20 that can control a dose to fit the cavity of the mold M, and then most of the monomer solution S injected into the syringe 20 is primarily injected at a high injection flow or speed into the mold M. Then, whether or not the monomer solution S fills the mold M is determined using the vision recognition system while the remaining amount is secondarily injected at a lower injection flow or speed, and then the injection is finished.

In this embodiment, as can be seen from FIGS. 2 to 5, the vision recognition system images the outline of the mold M and the fluid level L1 of the monomer solution S injected into the cavity of the mold M, and sets a first region A1 located in a part of the outline of the mold M and a second region A2 located outside the inlet of the mold M to detect the state in which the mold M is set at the injection position.

Meanwhile, when the image signal captured by the vision recognition system, that is, the outline of the mold M is detected in the first region A1, as shown in FIG. 2, the controller C determines that the mold M is loaded at the injection position. At this time, the controller C determines whether or not the imaged outline of the mold M matches the virtual outline L represented in the form of an arc in the first region A1. If not matching, imaging position adjustment to match the imaged outline of the mold M with the virtual outline L is performed by finely adjusting the vision recognition system, that is, by adjusting the position of the vision camera.

In the imaging position adjustment, the position of the first region A1 is adjusted, and at the same time, the position of the second region is moved by the same distance as the first region A1, so the second region A2 at the same position is imaged by the vision recognition system to detect a change in the fluid level of the monomer solution, even though the loading position of the mold M in the injection device is slightly changed.

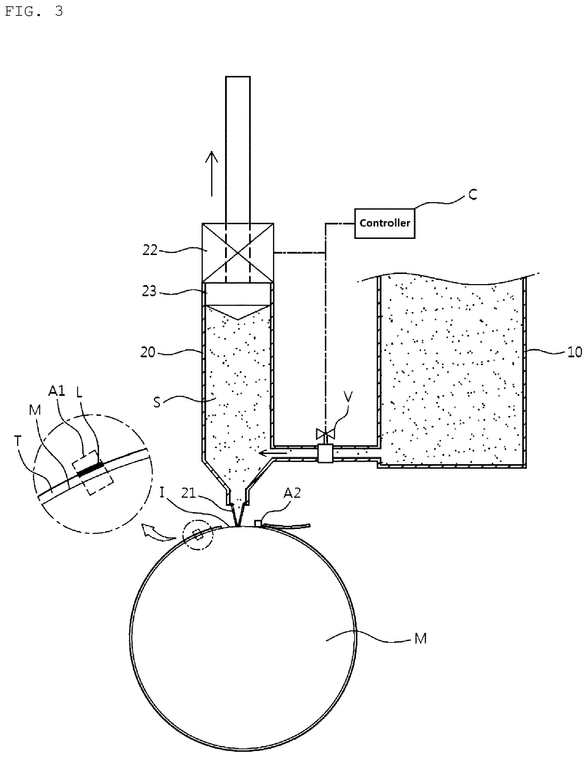

In addition, the controller C analyzes the image captured by the vision recognition system to detect the capacity of the cavity and the injection position setting according to the type of the mold M, and controls opening and closing operations of a driving unit 22 and a valve of a syringe 20 to regulate the amount of the monomer solution S sucked into the syringe 20, the timing of injection of the monomer solution S into the mold M, the injection flow or speed, and the end point, and to adjust the fine position of the vision recognition system, as shown in FIG. 3.

In addition, the controller C sets the injection flow or speed differently according to the type of the mold M and the monomer solution S through an external input means such as a touch pad or a keyboard, and is designed to store data obtained through repeated tests when using a new type of mold or monomer solution to determine and set an optimum injection flow or speed.

In this embodiment, the driving unit 22 is configured to suck the monomer solution into the syringe 20 by moving a plunger 23 forward and backward using the power of a motor (not shown), or to inject the sucked monomer solution into the mold M. However, the present invention is not limited to this configuration, and the driving method of the driving unit 22 may use various known methods.

A preferred embodiment for injecting the monomer for optical materials into the mold in accordance with the configuration as above will be described as follows.

First, as shown in FIG. 3, primarily, the monomer solution S is sucked into the syringe 20 in an amount corresponding to the volume of the cavity in the mold M according to the type of the mold M that is supplied. At this time, the valve V installed between the raw material tank 10 and the syringe 20 is kept open, and the nozzle 21 blocks the inflow of air from the outside by a built-in check valve (not shown), and the driving unit 22 disposed on the syringe 20 is operated to fill the syringe 20 with a set amount of the monomer solution S.

Meanwhile, the opening and closing operations of the valve V may be controlled by the controller C, and the valve V automatically opens when the driving unit 22 of the syringe 20 performs a suction operation using a check valve, and automatically closes when the driving unit 22 performs a discharge operation, that is, injection into the mold.

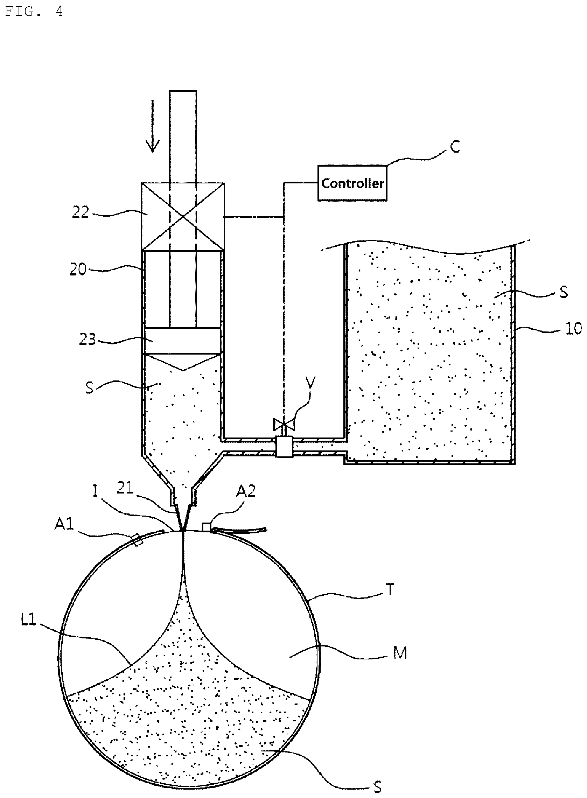

Next, as shown in FIG. 4, when the outline of the mold M is detected in the first region A1 in the image captured by the vision recognition system, the position of the camera is finely adjusted to match the virtual outline L. As a result, it is determined that the mold M is loaded at the injection position, and the driving unit 22 is driven in a direction opposite that of primary operation, so the monomer solution S inside the syringe 20 is injected into the mold M through the nozzle 21. At this time, the valve V is kept closed, the check valve provided with the nozzle 21 is opened, the driving unit 22 is operated to inject only a preset amount of the monomer solution S, and the preset amount is determined to be 90 to 98% of the amount primarily injected into the syringe 20.

In the above step, the injection flow or speed of the monomer solution S is set at the highest flow or speed at which bubbles are not formed, depending on the viscosity of the monomer solution or the thickness of the cavity inside the mold, in order to shorten the injection time.

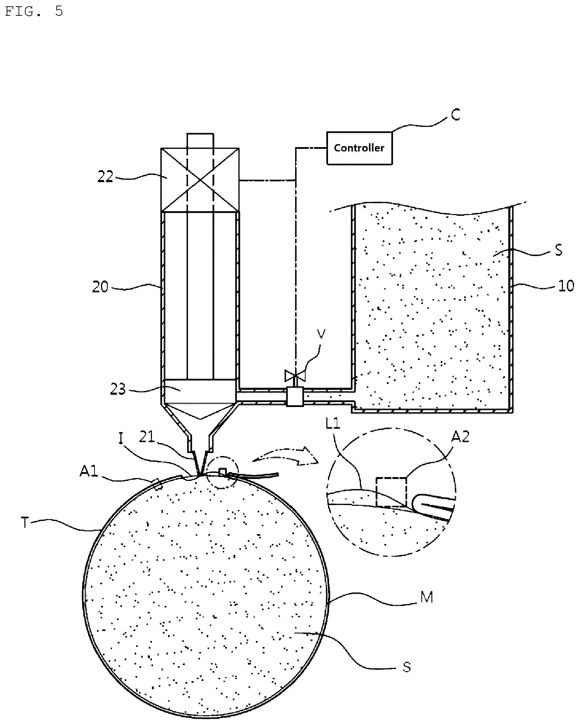

Finally, after most of the monomer solution S inside the syringe 20 is injected into the mold M by the driving of the driving unit 22 as described above, the driving speed of the driving unit 22 is controlled to be relatively slow to carefully enable injection of the remaining amount of the monomer solution at a lower injection flow rate. At this time, injection is conducted until the fluid level of the monomer solution S is detected in the second region A2 located outside the inlet I by the vision recognition system as shown in FIG. 5. When the fluid level of the monomer solution S is detected in the second region A2, located about 1 to 2 mm outside the inlet I of the mold M, by the surface tension, the operation of the syringe drive unit 22 is stopped, so the injection of the monomer solution S is completed. In a subsequent process, the sealing tape T that was opened is rewound to close the inlet I, and the mold is unloaded to complete the injection of the monomer solution S into the mold M.

When the outline of the mold M in the first region A1 matches the virtual outline L as a result of the above process, the monomer solution S is supplied at a preset first injection flow or speed according to the type of the supplied mold, the remaining amount of the monomer solution S is injected into the mold M at an injection flow or speed lower than the first injection flow or speed, and whether or not the fluid level L1 appears in the second region A2 located outside the mold M is determined. When the fluid level L1 appears, injection of the monomer solution is terminated. When the fluid level does not appear, the monomer solution is injected while being finely adjusted at a reduced low flow or speed until the fluid level appears in the second region A2.

Meanwhile, in the first and second regions, the outline of the mold or the fluid level of the monomer solution is detected by a change in shade and the change in shade is preferably detected by a change in the number of pixels. It was found that the boundary between the outline of the mold and the fluid level of the monomer solution appears as a linear shade due to the difference in density between the air and the mold and the monomer solution, so the outline of the mold and the fluid level of the monomer solution are formed by the number of pixels formed by the linear shade imaged in each region.

In this embodiment, since the outline of the mold M detected in the regions A1 and A2 and the thickness of the fluid level of the monomer solution are substantially constant, the number of pixels detected is almost constant, but various peripheral devices operate rapidly, and moreover, people and other devices move around the facility and thus they may be reflected in the mold or monomer solution as strange phenomena, thus causing false detection. Therefore, the amount of change in the number of pixels that are detected and the direction of the shadow are also detected in order to prevent false detection due to noise from various sources.

In this embodiment, the amount of the monomer solution that is injected at the first injection flow or speed is preferably 90 to 98% of the total injection amount, but the present invention is not limited thereto, and the first injection amount may slightly vary depending on the type of the mold and the viscosity of the monomer solution.

The preferred injection flow (amount) and injection speed according to the volume of the cavity formed between the pair of molds having a sealed outer circumference are as follows.

When the viscosity of the monomer is 10 to 150 CPS, in the case of a (-) lens (CYL(-)) or semi-lens, the injection rate is 10 ml to 450 ml/min when the volume in the cavity is 20 cc or less, the injection rate is 20 ml to 700 ml/min when the volume in the cavity is 20.1 cc to 40.0 cc, the injection rate is 40 ml to 900 ml/min when the volume in the cavity is 40.1 cc to 60.0 cc, the injection rate is 40 ml to 1200 ml/min when the volume in the cavity is 60.1 cc to 80.0 cc, and the injection rate is 80 ml to 1500 ml/min when the volume in the cavity is 80.1 cc to 100.0 cc. More preferably, the injection rate is 10 ml to 340 ml/min when the volume in the cavity is 20 cc or less, the injection rate is 20 ml to 580 ml/min when the volume in the cavity is 20.1 cc to 40.0 cc, the injection rate is 40 ml to 720 ml/min when the volume in the cavity is 40.1 cc to 60.0 cc, the injection rate is 60 ml to 960 ml/min when the volume in the cavity is 60.1 cc to 80.0 cc, and the injection rate is 80 ml to 1200 ml/min when the volume in the cavity is 80.1 cc to 100.0 cc.

When the viscosity of the monomer is 10 to 150 CPS, in the case of a (+) lens (CYL(+)), the injection rate is 8 ml to 190 ml/min when the volume in the cavity is 12 cc or less, the injection rate is 12 ml to 340 ml/min when the volume in the cavity is 12.1 cc to 20.0 cc, and the injection rate is 20 ml to 390 ml/min when the volume in the cavity is 20.1 cc to 30.0 cc. More preferably, the injection rate is 8 ml to 144 ml/min when the volume in the cavity is 12 cc or less, the injection rate is 12 ml to 240 ml/min when the volume in the cavity is 12.1 cc to 20.0 cc, and the injection rate is 20 ml to 300 ml/min when the volume in the cavity is 20.1 cc to 30.0 cc.

According to the method of automatically injecting the monomer solution according to the embodiment of the present invention described above, most of the monomer solution is initially injected into the mold in the shortest time at a high injection flow or speed, and then the remaining amount is injected at a relatively low injection flow or speed until the cavity inside the mold is filled in the second region, so the time required to inject the monomer solution can be shortened while an accurate amount can be injected without overflowing. There are advantages in that it is possible to improve productivity through a shortened processing time and to manufacture a lens with uniform quality, and defects due to injection of an insufficient or excessive amount of monomer and malfunction of the manufacturing device are prevented.

Hereinafter, the present invention will be described in more detail with reference to specific examples. However, the examples will be provided only for illustration of the present invention, and should not be construed as limiting the scope of the present invention.

### [Production Example]

0.5 g of an alpha-methylstyrene dimer as a polymerization regulator, 16 g of styrene, 3.3 g of dimethyl maleate and 0.2 g of diphenylisodecyl phosphite as a heat stabilizer were added to 65 g of component (I) (a compound having an equivalent weight of 259) and 15 g of component (II) (a compound having an equivalent weight of 472) of an epoxy acrylic compound in the following Formula 7, followed by stirring for about 30 minutes to obtain a homogeneous solution. Then, the homogeneous solution was filtered through a filter paper having a pore size of 0.45 µm or less. As a catalyst, 0.05 g of 2,2'-azobis(2,4-dimethylvarenonitrile) and 0.12 g of 1,1-bis(t-butylperoxy)-3,3,5-trimethyl cyclohexane were added to the result, and 0.2g of 8-PENPP (polyoxyethylene nonylphenyl phosphate (5% by weight of 9 molar ethylene oxide adduct, 80% by weight of 8 molar ethylene oxide adduct, 10% by weight of 7 molar ethylene oxide adduct, and 5% by weight of at least 6 molar ethylene oxide adduct)) as an internal release agent was mixed therewith. Then, the resulting mixture was stirred for 1 hour and defoamed under reduced pressure for 10 minutes, and then the resulting product was used as a monomer to be injected into the mold.

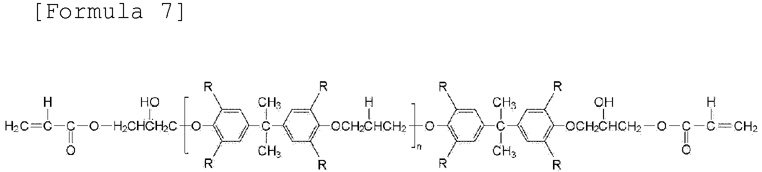

(wherein n is 1 to 15, R in component (I) is H, and R in component (II) is Br.)

The monomer was injected into the mold at the injection amount shown in the following Tables 1 to 3 using the automatic injector of the present invention, and was then cured to produce a 1.60 epoxy acrylic lens (Ne = 1.597). The volume in the cavity of the mold may be changed according to the refractive index, and Tables 1 to 3 show the injection amount of the monomer according to the mold diameter, lens thickness, and lens power (diopter) when producing a 1.60 epoxy acrylic lens (Ne = 1.597). Table 1 shows an example of manufacturing a -lens (CYL(-)), Table 2 shows an example of manufacturing a + lens (CYL(+)), and Table 3 shows an example of manufacturing a semi-lens.

**[Table 1]**

| MOLD | Central thickness | CYL(-) | | | | | | | | | | | | | | | | | SPH |
|---|---|---|---|---|---|---|---|---|---|---|---|---|---|---|---|---|---|---|---|
| m/m | m/m | 4.0 | 3.8 | 3.5 | 3.3 | 3.0 | 2.3 | 2.5 | 2.3 | 2.0 | 1.8 | 1.5 | 1.3 | 1.0 | 0.8 | 0.5 | 0.3 | 0.0 | |
| | 2.2 | 25.8 | 25.0 | 24.1 | 23.3 | 22.5 | 216 | 20.8 | 20.0 | 19.1 | 18.3 | 17.5 | 16.6 | 15.8 | 15.0 | 14.1 | 13.3 | 12.5 | 0.00 |
| | 1.7 | 25.3 | 24.4 | 23.6 | 22.8 | 21.9 | 21.1 | 20.3 | 19.4 | 18.6 | 17.8 | 17.0 | 16.1 | 153 | 14.5 | 13.6 | 12.8 | 13.3 | 0.25 |
| | 1.7 | 26.3 | 25.5 | 24.6 | 23.8 | 23.0 | 22.2 | 21.3 | 20.5 | 19.7 | 18.8 | 18.0 | 17.2 | 16.3 | 15.5 | 14.7 | 13.8 | 14.5 | 0.50 |
| | 1.7 | 27.4 | 26.5 | 25.7 | 24.9 | 24.0 | 23.2 | 22.4 | 21.5 | 20.7 | 19.9 | 19.0 | 18.2 | 17.4 | 16.5 | 15.7 | 14.9 | 15.6 | 0.75 |
| | 1.7 | 28.4 | 27.6 | 26.7 | 25.9 | 25.1 | 24.2 | 23.4 | 22.6 | 21.7 | 20.9 | 20.1 | 19.2 | 18.4 | 17.6 | 16.7 | 15.9 | 16.8 | 1.00 |
| | 1.3 | 27.4 | 26.5 | 25.7 | 24.9 | 24.0 | 23.2 | 22.4 | 21.5 | 20.7 | 19.9 | 19.0 | 18.2 | 17.4 | 16.5 | 15.7 | 14.9 | 15.4 | 1.25 |
| | 1.3 | 28.4 | 27.6 | 26.7 | 25.9 | 25.1 | 24.2 | 23.4 | 22.6 | 21.7 | 20.9 | 20.1 | 19.2 | 18.4 | 17.6 | 16.7 | 15.9 | 16.8 | 1.50 |
| | 1.3 | 29.4 | 28.6 | 27.8 | 26.9 | 26.1 | 25.3 | 24.4 | 23.6 | 22.8 | 21.9 | 21.1 | 20.3 | 19.4 | 18.6 | 17.8 | 17.0 | 17.9 | 1.75 |
| | 1.3 | 30.5 | 29.6 | 28.8 | 28.0 | 27.1 | 26.3 | 25.5 | 24.6 | 23.8 | 23.0 | 22.2 | 21.3 | 20.5 | 19.7 | 18.8 | 18.0 | 17.2 | 2.00 |
| | 1.3 | 31.5 | 30.7 | 29.8 | 29.0 | 28.2 | 27.4 | 26.5 | 25.7 | 24.9 | 24.0 | 23.2 | 22.4 | 21.5 | 20.7 | 19.9 | 19.0 | 20.3 | 2.25 |
| | 1.3 | 32.6 | 31.7 | 30.9 | 30.1 | 292 | 28.4 | 27.6 | 26.7 | 25.9 | 25.1 | 24.2 | 23.4 | 22.6 | 21.7 | 20.9 | 20.1 | 19.2 | 2.50 |
| | 1.3 | 33.6 | 32.8 | 31.9 | 31.1 | 30.3 | 29.4 | 28.6 | 27.8 | 26.9 | 26.1 | 25.3 | 24.4 | 23.6 | 22.8 | 21.9 | 21.1 | 22.6 | 2.75 |
| 80 | 1.3 | 34.6 | 33.8 | 33.0 | 32.1 | 313 | 30.5 | 29.6 | 28.8 | 28.0 | 27.1 | 26.3 | 25.5 | 24.6 | 23.8 | 23.0 | 22.2 | 21.3 | 3.00 |
| | 1.3 | 35.7 | 34.8 | 34.0 | 33.2 | 32.3 | 31.5 | 30.7 | 29.8 | 29.0 | 28.2 | 27.4 | 26.5 | 25.7 | 24.9 | 24.0 | 23.2 | 25.3 | 3.25 |
| | 1.3 | 36.7 | 35.9 | 35.0 | 34.2 | 33.4 | 32.6 | 31.7 | 30.9 | 30.1 | 29.2 | 28.4 | 27.6 | 26.7 | 259 | 25.1 | 24.2 | 23.4 | 3.50 |
| | 1.3 | 37.8 | 36.9 | 36.1 | 35.3 | 34.4 | 33.6 | 32.8 | 31.9 | 31.1 | 30.3 | 29.4 | 28.6 | 27.8 | 26.9 | 26.1 | 25.3 | 27.6 | 3.75 |
| | 1.3 | 38.8 | 38.0 | 37.1 | 36.3 | 35.5 | 34.6 | 33.8 | 33.0 | 32.1 | 31.3 | 30.5 | 29.6 | 28.8 | 28.0 | 27.1 | 26.3 | 25.5 | 4.00 |
| | 1.3 | 39.8 | 39.0 | 38.2 | 37.3 | 36.5 | 35.7 | 34.8 | 34.0 | 33.2 | 32.3 | 31.5 | 30.7 | 29.8 | 29.0 | 28.2 | 27.4 | 29.9 | 4.25 |
| | 1.3 | 40.9 | 40.0 | 39.2 | 38.4 | 37.5 | 36.7 | 35.9 | 35.0 | 34.2 | 33.4 | 32.6 | 31.7 | 30.9 | 30.1 | 29.2 | 28.4 | 27.6 | 4.50 |
| | 1.3 | 41.9 | 41.1 | 40.2 | 39.4 | 33.6 | 37.8 | 36.9 | 36.1 | 35.3 | 34.4 | 33.6 | 32.8 | 31.9 | 31.1 | 30.3 | 29.4 | 33.0 | 4.75 |
| | 1.3 | 43.0 | 42.1 | 41.3 | 40.5 | 39.6 | 38.8 | 38.0 | 37.1 | 36.3 | 35.5 | 34.6 | 33.8 | 33.0 | 32.1 | 31.3 | 30.5 | 29.6 | 5.00 |
| | 1.3 | 44.0 | 43.2 | 42.3 | 41.5 | 40.7 | 39.8 | 39.0 | 38.2 | 37.3 | 36.5 | 35.7 | 34.8 | 34.0 | 33.2 | 32.3 | 31.5 | 35.3 | 5.25 |
| | 1.3 | 45.0 | 44.2 | 43.4 | 42.5 | 417 | 40.9 | 40.0 | 39.2 | 38.4 | 37.5 | 36.7 | 35.9 | 35.0 | 34.2 | 33.4 | 32.6 | 31.7 | 5.50 |
| | 1.3 | 46.1 | 45.2 | 44.4 | 43.6 | 42.7 | 41.9 | 41.1 | 40.2 | 39.4 | 38.6 | 37.8 | 36.9 | 36.1 | 35.3 | 34.4 | 33.6 | 37.5 | 5.75 |
| | 1.3 | 47.1 | 46.3 | 45.4 | 44.6 | 43.8 | 43.0 | 42.1 | 41.3 | 40.5 | 39.6 | 38.8 | 38.0 | 37.1 | 36.3 | 35.5 | 34.6 | 33.8 | 6.00 |

**[Table 2]**

| Mold | Variable thickness | CYL(+) | | | | | | | | | SPH |
|---|---|---|---|---|---|---|---|---|---|---|---|
| m/m | m/m | 0.00 | 0.25 | 0.50 | 0.75 | 1.00 | 1.25 | 1.50 | 1.75 | 2.00 | 0.00 |
| | 2.2 | 9.7 | 10.0 | 10.3 | 10.6 | 109 | 11.2 | 11.5 | 11.8 | 12.1 | 0.25 |
| | 1.5 | 10.0 | 10.3 | 10.6 | 10.9 | 11.2 | 11.5 | 11.8 | 12.1 | 12.4 | 0.50 |
| | 1.4 | 10.3 | 10.6 | 10.9 | 11.2 | 11.5 | 11.8 | 12.1 | 12.4 | 12.7 | 0.75 |
| | 1.3 | 10.6 | 10.9 | 11.2 | 11.5 | 11.8 | 12.1 | 12.4 | 12.7 | 13.0 | 1.00 |
| | 1.3 | 10.9 | 11.2 | 11.5 | 11.8 | 12.1 | 12.4 | 12.7 | 13.0 | 13.3 | 1.25 |
| | 1.3 | 11.2 | 11.5 | 11.8 | 12.1 | 12.4 | 12.7 | 13.0 | 13.3 | 13.6 | 1.50 |
| | 1.3 | 11.5 | 11.8 | 12.1 | 12.4 | 12.7 | 13.0 | 13.3 | 13.6 | 13.9 | 1.75 |
| | 1.3 | 11.8 | 12.1 | 12.4 | 12.7 | 13.0 | 13.3 | 13.6 | 13.9 | 14.2 | 2.00 |
| | 1.3 | 12.1 | 12.4 | 12.7 | 13.0 | 13.3 | 13.6 | 13.9 | 14.2 | 14.5 | 2.25 |
| | 1.3 | 12.4 | 12.7 | 13.0 | 13.3 | 13.6 | 13.9 | 14.2 | 14.5 | 14.8 | 2.50 |
| | 1.3 | 12.7 | 13.0 | 13.3 | 13.6 | 13.9 | 14.2 | 14.5 | 14.8 | 15.1 | 2.75 |
| 70 | 1.3 | 13.0 | 13.3 | 13.6 | 13.9 | 14.2 | 14.5 | 14.8 | 15.1 | 15.4 | 3.00 |
| | 1.3 | 13.3 | 13.6 | 13.9 | 14.2 | 14.5 | 14.8 | 15.1 | 15.4 | 15.7 | 3.25 |
| | 1.3 | 13.6 | 13.9 | 14.2 | 14.5 | 14.8 | 15.1 | 15.4 | 15.7 | 16.0 | 3.50 |
| | 1.3 | 13.9 | 14.2 | 14.5 | 14.8 | 15.1 | 154 | 15.7 | 160 | 16.3 | 3.75 |
| | 1.3 | 14.2 | 14.5 | 14.8 | 15.1 | 154 | 15.7 | 16.0 | 16.3 | 16.6 | 4.00 |
| | 1.3 | 14.5 | 14.8 | 15.1 | 15.4 | 15.7 | 16.0 | 16.3 | 16.6 | 16.9 | 4.25 |
| | 1.3 | 14.8 | 15.1 | 15.4 | 15.7 | 16.0 | 16.3 | 16.6 | 16.9 | 17.2 | 4.50 |
| | 1.3 | 15.1 | 15.4 | 15.7 | 16.0 | 16.3 | 16.6 | 16.9 | 17.2 | 17.5 | 4.75 |
| | 1.3 | 15.4 | 15.7 | 16.0 | 16.3 | 16.6 | 16.9 | 17.2 | 17.5 | 17.8 | 5.00 |
| | 1.3 | 15.7 | 16.0 | 16.3 | 16.6 | 16.9 | 17.2 | 17.5 | 17.8 | 18.1 | 5.25 |
| | 1.3 | 16.0 | 16.3 | 16.6 | 16.9 | 17.2 | 17.5 | 17.8 | 18.1 | 18.4 | 5.50 |
| | 1.3 | 16.3 | 16.6 | 16.9 | 17.2 | 17.5 | 17.8 | 18.1 | 18.4 | 18.7 | 5.75 |
| | 1.3 | 16.6 | 16.9 | 17.2 | 17.5 | 17.8 | 18.1 | 18.4 | 18.7 | 19.0 | 6.00 |

**[Table 3]**

| SEMI monomer injection amount(g) | | |
|---|---|---|
| Nominal | Injection amount(g) | Mold m/m |
| 0.50 | 84.7 | 75 |
| 1.50 | 76.5 | |
| 2.25 | 69.4 | |
| 3.50 | 61.2 | 80 |
| 5.00 | 53.0 | |
| 6.75 | 50.0 | |
| 8.50 | 46.9 | 75 |
| 10.25 | 47.9 | |
| 11.50 | 43.9 | 70 |
| 12.50 | 47.9 | |

[Description of reference numerals]
- C:: Controller
- I:: inlet
- L:: Virtual outline
- L1:: Fluid level
- M:: Mold
- A1, A2:: Detection regions
- S:: Monomer solution
- T:: Sealing tape
- V:: Valve
- 10:: Raw material tank

- 20:: Syringe
- 21:: Nozzle
- 22:: Driving unit
- 23:: Plunger

## Claims

1. A method of automatically injecting a monomer for optical materials into a mold, comprising injecting a monomer solution into a cavity formed between a pair of molds having a sealed outer circumference, the method comprising:
a first step of injecting most of the monomer solution into the mold; and
a second step of injecting the monomer while detecting a fluid level using a vision recognition system, and then ending injection of the monomer solution when a fluid level is detected at a final injection point.

2. The method according to claim 1, wherein the vision recognition system images an outline of the mold and a fluid level of the monomer solution injected into the mold, and sets a first region located in a part of the outline of the mold and a second region located outside the mold to detect a state in which the mold is set at the injection position, and the controller injects most of the monomer solution into the mold at a set first injection flow or speed, when the outline of the mold is detected in the first region, injects the remaining amount thereof at a lower injection flow or speed than the first injection flow or speed and ends the injection when the fluid level is detected in the second region.

3. The method according to claim 2, wherein, in the first and second regions, the outline of the mold and the fluid level of the monomer solution are detected based on a change in a shade.

4. The method according to claim 3, wherein the change in shade is detected based on a change in a number of pixels.

5. The method according to claim 2, wherein a virtual outline is displayed in a form of an arc in the first region, an imaging position is adjusted such that the imaged outline of the mold corresponds to the virtual outline when the mold outline is detected in the first region, and the change in the fluid level is detected by adjustment of a position of the second region depending on a change in a position of the first region.

6. The method according to claim 2, wherein the first region is intended to mean a location that has both X-direction information and Y-direction information, in an outer circumference of the mold.

7. The method according to claim 2, wherein, in a step of injecting the monomer composition into the mold at the first injection flow or speed, the monomer composition is injected in an amount of 90 to 98% of a volume of the cavity in the mold.
